# EUROPEAN PATENT SPECIFICATION

(11) **EP 3 878 559 B1**
(45) Date of publication and mention of the grant of the patent: **08.04.2026**
(21) Application number: 20162575.3
(22) Date of filing: 12.03.2020
(51) Int. Cl.: B04B 9/12, B04B 11/02, B04B 1/08, F16C 19/18, F16C 23/08, F16C 25/08, F16C 27/08, F16C 35/077, F16C 39/02, F16C 27/06

(54) **A CENTRIFUGAL SEPARATOR**
ZENTRIFUGALABSCHEIDER
SÉPARATEUR CENTRIFUGE

(43) Date of publication of application: 15.09.2021
(73) Proprietor: Alfa Laval Corporate AB, 221 00 Lund (SE)
(72) Inventor: ELIASSON, Thomas, SE-125 40 ÄLVSJÖ (SE)
(74) Representative: Alfa Laval Attorneys

(56) References cited:
- EP-A1- 0 884 108
- WO-A1-00/78465
- DE-A1- 1 482 737
- US-A- 3 709 570
- US-A1- 2015 283 561

## Description

### TECHNICAL FIELD OF THE INVENTION

The present invention refers to a centrifugal separator configured for heavy duty applications and for continuous supply of a product to be processed. In particular, the present invention refers to a centrifugal separator according to the preamble of claim 1 and the preamble of claim 17.

### BACKGROUND OF THE INVENTION AND PRIOR ART

Centrifugal separators of this kind commonly comprise a centrifuge rotor mounted to a typically vertical spindle driven by a drive unit located beneath the centrifuge rotor. The centrifuge rotor typically has a relatively large weight in comparison to the drive unit. In addition, the centrifuge rotor is configured to receive a large amount of the product to be separated. The mass carried by the spindle during operation of the centrifugal separator is thus significant. Relatively small imbalances of the centrifuge rotor may create problems during operation, in particular when, during up-start, the centrifuge rotor has to pass the critical rotational speed in order to achieve the most appropriate supercritical rotational speed for the desired separation efficiency.

US 2015/283561 discloses a centrifugal separator comprising a centrifugal drum and a drive spindle rotatably mounted in a drive housing by a neck bearing and a foot bearing. The drive housing encloses a drive chamber and an electric motor which has a stator and a motor rotor. The motor rotor is disposed on the drive spindle and the stator is fixedly connected to the drive housing. An air gap exists between the stator and the motor rotor. The stator and the motor rotor are arranged between the neck bearing and the foot bearing. The foot bearing is designed as a pivot bearing and axially supports the centrifugal drum. The neck bearing is radially supported, via at least one elastic element, in a bearing housing which in its turn is fastened on the drive housing. The elastic element consists of two metal sleeves which are interconnected by means of a ring consisting of elastomer material.

The elastic elements of US 2015/283561 that support the neck bearing permit the spindle to make small radial movements during operation. However, the design may result in the spindle being slightly tilted when it is moved radially from a geometric center axis. The elastic elements supporting the neck bearing do not seem to be configured to compensate for such tilting. The tilting of the spindle may thus result in forces striving to rotate the inner and outer bearing rings of the neck bearing around a transversal axis in relation to each other, which may cause premature wear of the neck bearing.

US 9,427,747 discloses a centrifugal separator which is suitable for heavy duty applications and comprises a frame, a spindle and centrifuge rotor on the spindle. The centrifuge rotor comprises a rotor casing forming an inner separation space, an inlet for supply of a fluid and an outlet for discharge of a separated component. A drive motor having a stator and a rotor drives the spindle and the centrifuge rotor. The motor rotor is supported by a first bearing and second bearing. A coupling member connects the motor rotor and the spindle for transmitting a rotary movement from the motor rotor to the spindle. A third bearing supports the spindle so that it is radially elastic in relation to the frame for transmitting a first part of radial forces between the spindle and the frame. The coupling member comprises a lamella coupling or a universal coupling, and transmits a second part of the radial forces, which exists between the spindle and the frame, to the frame via the motor rotor and the first and the second bearings.

### SUMMARY OF THE INVENTION

The object of the present invention is to overcome the problems discussed above. In particular, it is aimed at a centrifugal separator permitting tilting, or slight tilting, of the spindle during operation.

This object is achieved by the centrifugal separator initially defined, which is characterised in that the upper bearing housing is mounted to the stationary frame via the elastic member and an upper tilting member permitting the spindle to tilt in relation to the_central axis during operation of the centrifugal separator, wherein the elastic member and the upper tilting member are arranged one after the other in a radial direction and wherein the upper tilting member comprises a pack of annular disks extending around the upper bearing housing and being attached to the upper bearing housing and to the elastic member.

According to an embodiment of the invention, the elastic member is located radially outside the tilting member. Alternatively, the elastic member may be located radially inside the tilting member.

By means of the upper tilting member, the forces, acting on the at least one bearing of the upper bearing housing and striving to rotate the bearing rings of the at least one bearing to each other and around a transversal axis, may be displaced from the bearing and radially outwards to the upper tilting member, which in turn permits the bearing housing to tilt in relation the central axis. Thus, torsional forces transverse to the spindle acting on the at least one bearing of the upper bearing housing when the spindle is tilted may be considerably reduced in comparison with the upper bearing housing being mounted directly, or only via the elastic member, in the stationary frame. Consequently, there may be no relative rotating movements between an inner bearing ring and an outer bearing ring of the one of more bearings of the upper bearing housing even if the spindle is tilted. The at least one bearing of the upper bearing housing may thus operate under low-force conditions even if the spindle is tilted. Moreover, the wear of the elastic member may be reduced in comparison with the upper bearing housing being mounted only via the elastic member in the stationary frame due to the reduced torsional forces. Consequently, there may be no relative rotating movements between an inner bearing ring and an outer bearing ring of the one of more bearings of the upper bearing housing even if the spindle is tilted.

According to an embodiment of the invention, the upper bearing housing is located between the rotating member of the drive unit and the centrifuge rotor.

The pack of annular disks may be flexible. Each one of the annular disks may be flexible. The annular disks may adjoin each other in the pack of annular disks.

When subjected to bending stress, a tilting member comprising a pack of annular disks will bend easily in comparison with a tilting member made from one piece of homogenous material. Moreover, when a tilting member comprising a pack of annular disks is subjected to uniaxial stress, it is as strong as a tilting member made from one piece of homogenous material. Thus, the tilting member comprising a pack of annular disks provides the bendability to reduce the torsional load on the at least one bearing while being strong enough to support the spindle via the upper bearing housing.

According to an embodiment of the invention, the pack of annular disks of the upper tilting member is attached to the upper bearing housing by at least three primary attachment members equidistantly separated from each other around the annular disks, and attached to the elastic member by at least three secondary attachment members each being positioned between a respective pair of adjacent primary attachment members.

Such an alternating attachment of the pack of annular disks to the upper bearing housing and to the elastic member may ensure a rigid attachment to the upper bearing housing and to the elastic member, and a flexibility permitting the upper bearing housing and the spindle to tilt.

According to an embodiment of the invention, the pack of annular disks of the upper tilting member is attached to the stationary frame by at least three primary attachment members equidistantly separated from each other around the annular disks, and attached to the elastic member by at least three secondary attachment members each being positioned between a respective pair of adjacent primary attachment members.

Also such an alternating attachment of the pack of annular disks to the stationary frame and to the elastic member may ensure a rigid attachment to the stationary frame and to the elastic member, and a flexibility permitting the upper bearing housing and the spindle to tilt.

According to an embodiment of the invention, each of the primary and secondary attachment members comprises a screw bolt extending through a respective aperture through the pack of annular disks of the upper tilting member. Such screw bolts permit an easy and efficient mounting of the pack of annular disks to the upper bearing housing and the elastic member.

According to an embodiment of the invention, the at least one bearing comprises a first bearing comprising an outer bearing ring attached to the upper bearing housing and an inner bearing ring attached to the spindle, a second bearing comprising an outer bearing ring attached to the upper bearing housing and an inner bearing ring attached to the spindle, and possibly a third bearing comprising an outer bearing ring attached to the upper bearing housing and an inner bearing ring attached to the spindle. By arranging a number of bearings, i.e. at least the first bearing and the second bearing, in the upper bearing housing, a rigid support of the spindle is achieved.

According to an embodiment of the invention, the centrifugal separator comprises a lower bearing housing mounted to the stationary frame and supporting at least one bearing comprising an outer bearing ring attached to the lower bearing housing and an inner bearing ring attached to the spindle. The lower bearing housing may be provided outside the rotating member of the drive unit. The lower bearing housing and the at least one bearing may contribute to a more rigid support of the spindle and the centrifuge rotor.

According to an embodiment of the invention, the lower bearing housing is mounted to the stationary frame via a lower tilting member permitting the spindle to tilt in relation to the central axis during operation of the centrifugal separator.

By means of the lower tilting member, the forces, acting on the at least one bearing of the lower bearing housing and striving to rotate the bearing rings of the at least one bearing in relation to each other and around a transversal axis, may be displaced from the bearing and radially outwards to the lower tilting member. The at least one bearing of the lower bearing housing may thus operate under low-force conditions even if the spindle is tilted. Consequently, there may be no relative rotating movements between an inner bearing ring and an outer bearing ring of the one of more bearings of the lower bearing housing even if the spindle is tilted.

According to an embodiment of the invention, the lower tilting member comprises a pack of annular disks extending around the lower bearing housing and being attached to the lower bearing housing and to the stationary frame. In contrast to the upper tilting member, the lower tilting member may thus be attached directly to the stationary frame without any intermediate elastic member.

The pack of annular disks or the lower tilting member may be flexible. Each of the annular disks may be flexible. The annular disks may adjoin each other in the pack of annular disks of the lower tilting member.

When subjected to bending stress, a tilting member comprising a pack of annular disks will bend easily in comparison with a tilting member made from one piece of homogenous material. Moreover, when a tilting member comprising a pack of annular disks is subjected to uniaxial stress, it is as strong as a tilting member made from one piece of homogenous material. Thus, the tilting member comprising a pack of annular disks provides the bendability to reduce the torsional load on the at least one bearing while being strong enough to support the spindle via the lower bearing housing.

According to an embodiment of the invention, the pack of annular disks of the lower tilting member is attached to the lower bearing housing by at least three primary attachment members equidistantly separated from each other around the annular disks, and to the stationary frame by at least three secondary attachment members each being positioned between a respective pair of adjacent primary attachment members. This alternating attachment of the pack of annular disks to the lower bearing housing and the stationary frame ensures a rigid attachment to the lower bearing housing and to the stationary frame, and a flexibility permitting the lower bearing housing and the spindle to tilt.

According to an embodiment of the invention, each of the primary and secondary attachment members attaching the lower tilting member comprises a screw bolt extending through a respective aperture through the pack of annular disks of the lower tilting member, wherein the screw bolts of the primary attachment members extend through the pack of annular disks in a first axial direction and the screw bolts of the secondary attachment members extend through the pack of annular disks in an opposite second axial direction. The screw bolts permit an easy and efficient mounting of the pack of annular disks to the lower bearing housing and the stationary frame.

According to an embodiment of the invention, the at least one bearing of the lower bearing housing comprises a first bearing comprising an outer bearing ring attached to the lower bearing housing and an inner bearing ring attached to the spindle, a second bearing comprising an outer bearing ring attached to the lower bearing housing and an inner bearing ring attached to the spindle, and possibly a third bearing comprising an outer bearing ring attached to the lower bearing housing and an inner bearing ring attached to the spindle. By arranging a number of bearings, i.e. at least the first bearing and the second bearing, in the lower bearing housing, a rigid support of the spindle is achieved.

According to an embodiment of the invention, the lower bearing housing comprises a lower convex spherical surface supported by a concave spherical surface provided on the stationary frame. The spherical surfaces may provide a lower support for the spindle and may provide a tilting point around which the spindle may tilt.

According to an embodiment of the invention, the rotating member of the drive unit is mounted on the spindle between the upper bearing housing and the lower bearing housing. The rotating member may thus be fixed to the spindle, which may be supported at both an upper end and a lower end of the rotating member.

According to an embodiment of the invention, the drive unit comprises an electric motor having a stator attached to the stationary frame and a motor rotor.

According to an embodiment of the invention, the rotating member comprises the motor rotor. The motor rotor may thus be provided on and around the spindle.

According to an embodiment of the invention, the spindle is hollow and surrounds the inlet for the product and/or the first outlet for the relatively light component.

The object is further achieved by the centrifugal separator initially defined, which is further characterised in that the upper bearing housing is mounted to the stationary frame via the elastic member and an upper tilting member permitting the spindle to tilt in relation to the central axis during operation of the centrifugal separator, wherein the elastic member and the upper tilting member are arranged one after the other in a radial direction, wherein the centrifugal separator comprises a lower bearing housing mounted to the stationary frame and supporting at least one bearing comprising an outer bearing ring attached to the lower bearing housing and an inner bearing ring attached to the spindle, and wherein the lower bearing housing is mounted to the stationary frame via a lower tilting member permitting the spindle to tilt in relation to the central axis during operation of the centrifugal separator, and wherein the lower tilting member comprises a pack of annular disks extending around the lower bearing housing and being attached to the lower bearing housing and to the stationary frame.

### BRIEF DESCRIPTION OF THE DRAWINGS

The present invention will now be explained more closely by means of a description of various embodiments and with reference to the drawings attached hereto.
- Fig 1: discloses a sectional view of a centrifugal separator according to a first embodiment of the invention.
- Fig 2: discloses a sectional view of a drive unit of the centrifugal separator in Fig 1.
- Fig 3: discloses a sectional view through a stationary frame of the centrifugal separator along the line III-III in Fig 2.
- Fig 4: discloses a sectional view along the line IV-IV in Fig 3.
- Fig 5: discloses an enlarged part of the sectional view in Fig 4.
- Fig 6: discloses a sectional view along the line VI-VI in Fig 3.
- Fig 7: discloses an enlarged part of the sectional view in Fig 6.
- Fig 8: discloses a perspective view from above of a part of the stationary frame.
- Fig 9: discloses a sectional view through the stationary frame of the centrifugal separator along the line IX-IX in Fig 2.
- Fig 10: discloses a sectional view along the line X-X in Fig 9.
- Fig 11: discloses an enlarged part of the sectional view in Fig 10.
- Fig 12: discloses a sectional view along the line XI-XI in Fig 9.
- Fig 13: discloses an enlarged part of the sectional view in Fig 12.
- Fig 14: discloses a perspective view of a lower part of the stationary.
- Fig 15: discloses a sectional view similar to the one of Fig 3 through a stationary frame of a centrifugal separator according to a second embodiment of the invention.
- Fig 16: discloses a sectional view along the line XVI-XVI in Fig 15.
- Fig 17: discloses an enlarged part of the sectional view in Fig 16.
- Fig 18: discloses a sectional view along the line XVIII-XVIII in Fig 15.
- Fig 19: discloses an enlarged part of the sectional view in Fig 18.
- Fig 20: discloses a perspective view from above of a part of the stationary frame in Fig 15.

### DETAILED DESCRIPTION OF VARIOUS EMBODIMENTS OF THE INVENTION

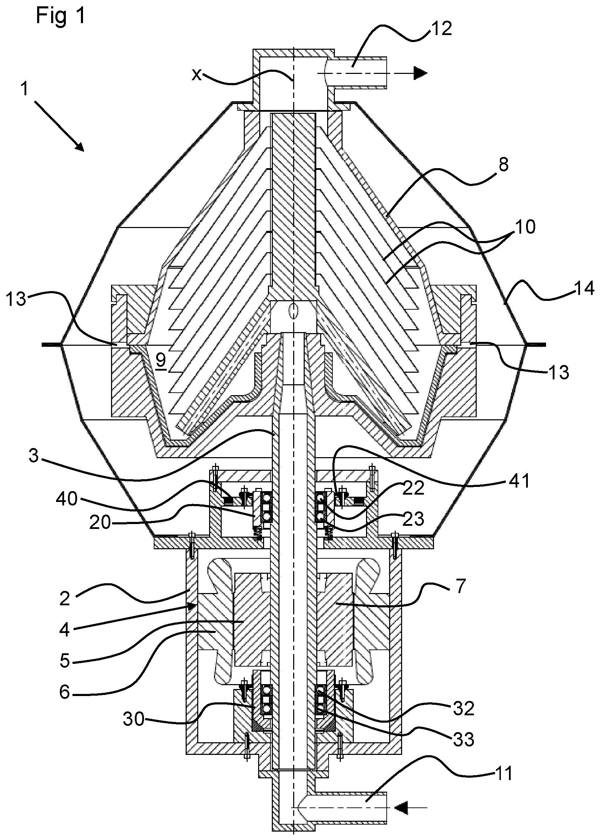

Fig 1 discloses a first embodiment of a centrifugal separator 1 for processing a product by separating a relatively heavy component and a relatively light component from the product. The centrifugal separator 1 comprises a stationary frame 2 and a spindle 3 extending in parallel with a central axis x. The spindle 3 is supported by the stationary frame 2 and permitted to rotate in relation to the stationary frame 2. The central axis x extends through a lower end and an upper end of the centrifugal separator 1, as indicated in Fig 1. It shall be noted that the centrifugal separator 1 may be used in another position than with the central axis x extending vertically as shown in Fig1.

The stationary frame 2 may also comprise a suitable base element (not disclosed) permitting the stationary frame 2 and the centrifugal separator 1 to be positioned on a ground, a floor or the like.

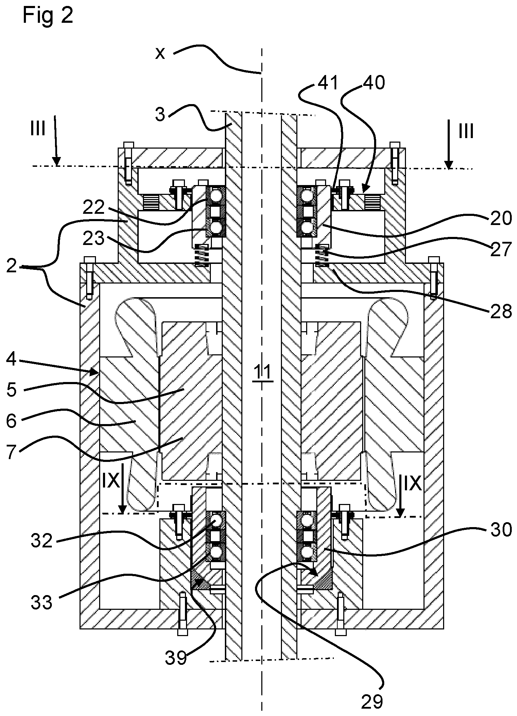

The centrifugal separator 1 comprises a drive unit 4, see also Fig 2, comprising a rotating member 5 mounted on the spindle 3. The drive unit 4 is configured to rotate the spindle 3 in relation to the stationary frame 2, essentially around the central axis x. The drive unit 4 may comprise an electric motor having a stator 6 attached to the stationary frame 2 and a motor rotor 7. In the embodiments disclosed, the rotating member 5 comprises or forms the motor rotor 7 of the electric motor.

Furthermore, the centrifugal separator 1 comprises a centrifuge rotor 8 that is mounted to an upper end of the spindle 3 to rotate together with the spindle 3. The centrifuge rotor 8 encloses a separation space 9. The centrifuge rotor 8 may comprise a stack of separation disks 10 provided in the separation space 9. The separation disks 10 may be frusto-conical.

An inlet 11 for the product extends to the separation space 9. A first outlet 12 for the relatively light component and a second outlet 13 for the relatively heavy component extends from the separation space 9. The second outlet 13 may comprise a plurality of peripheral ports that extend through the centrifuge rotor 8.

The peripheral ports may be openable for intermittent discharge of the relatively heavy component, such as sludge, from the separation space 9.

In the embodiments disclosed, the inlet 11 is located in the proximity of the lower end of the centrifugal separator 1. The first outlet 12 is located in the proximity of the upper end of the centrifugal separator 1.

The spindle 3 may be hollow and form an inner channel to the separation space 9. In the embodiments disclosed, the inlet 11 for the product extends through the inner channel of the hollow spindle 3 to the inner space 9 of the centrifuge rotor 8. Alternatively, the first outlet 12 for the relatively light component may extend through the hollow spindle 3. According to a further alternative both the inlet 11 and the outlet 12 may be arranged to extend through the hollow spindle 3.

According to a still further alternative, the spindle 3 may lack any inlet or outlet, wherein both the inlet 11 and the first outlet 12 may be located in the proximity of the upper end of the centrifugal separator 1.

The centrifugal separator 1 also comprises an outer casing 14 attached to the stationary frame 2 and enclosing the centrifuge rotor 8.

In the embodiments disclosed, the centrifugal separator 1 comprises an upper bearing housing 20 and a lower bearing housing 30. The upper bearing housing 20 may be located between the rotating member 5 of the drive unit 4 and the centrifuge rotor 8. The lower bearing housing 30 may be provided outside the rotating member 5 of the drive unit 4, i.e. between the rotating member 5 of the drive unit 4 and the lower end of the centrifugal separator 1.

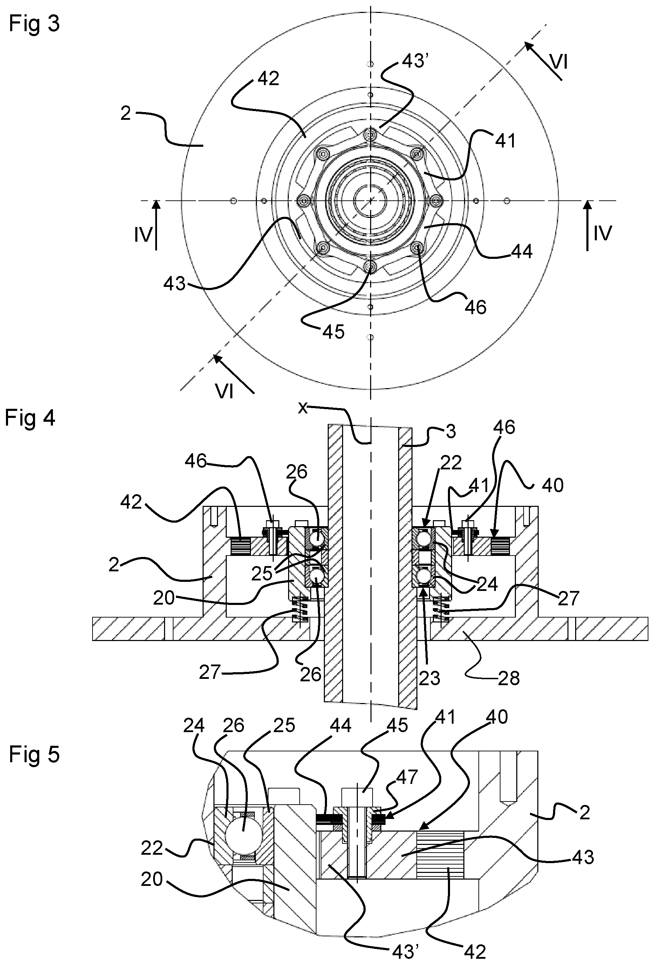

The upper bearing housing 20 is mounted to the stationary frame 2, see also Fig 4. In the embodiments disclosed, the upper bearing housing 20 supports a first bearing 22 comprising an outer bearing ring 24 attached to the upper bearing housing 20 and an inner bearing ring 25 attached to the spindle 3, and a second bearing 23 comprising an outer bearing ring 24 attached to the upper bearing housing 20 and an inner bearing ring 25 attached to the spindle 3. Roller elements 26 may be provided between the outer bearing ring 24 and the inner bearing ring 25.

The first and/or second bearings 22, 23 of the upper bearing housing 20 may be configured to provide radial support to the spindle 3, and possibly also axial support in order to carry the load of the centrifuge rotor 8.

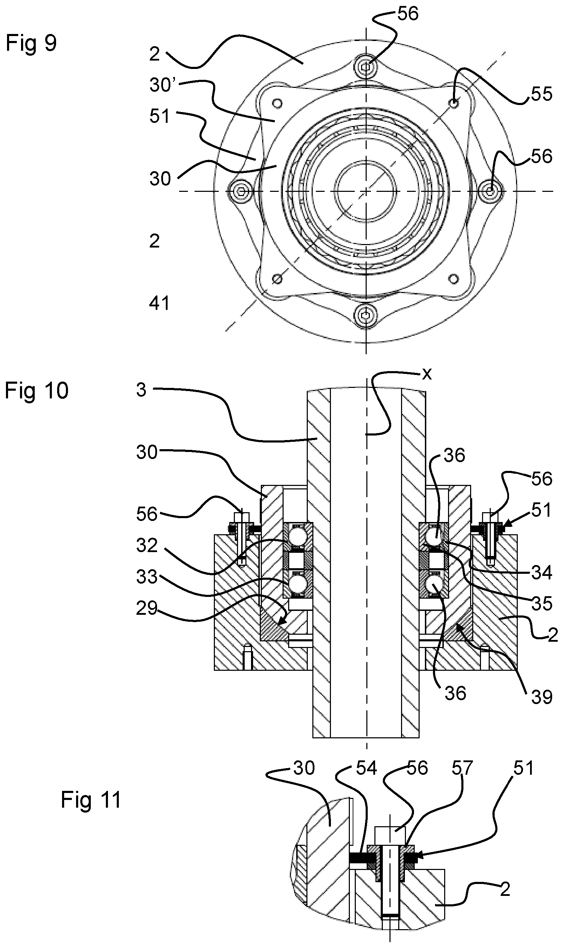

The lower bearing housing 30 is mounted to the stationary frame 2, see also Fig 10. In the embodiments disclosed, the lower bearing housing 30 supports a first bearing 32 comprising an outer bearing ring 34 attached to the lower bearing housing 30 and an inner bearing ring 35 attached to the spindle 3, and a second bearing 33 comprising an outer bearing ring 34 attached to the lower bearing housing 30 and an inner bearing ring 35 attached to the spindle 3. Roller elements 36 may be provided between the outer bearing ring 34 and the inner bearing ring 35.

The first and/or second bearings 32, 33 of the lower bearing housing 30 may be configured to provide radial support to the spindle 3, and possibly also axial support in order to carry the load of the centrifuge rotor 8.

The upper bearing housing 20 is mounted to the stationary frame 2 via an elastic member 40 permitting the upper bearing housing 20 and thus the spindle 3 to move radially during the rotation of the spindle 3.

In the first embodiment, the upper bearing housing 20 is mounted to the elastic member 40 via an upper tilting member 41 permitting the spindle 3 to tilt in relation to the central axis x.

In the embodiments disclosed, the elastic member 40 comprises an annular elastic element 42 and a ring element 43. The elastic element 42 is attached to the frame 2 and the ring element 43 is attached to the tilting member 41.

The elastic element 42 may be made of a rubber material, such as e.g. nitrile rubber.

In the first embodiment, the elastic member 40 is located radially outside the tilting member 41, wherein the elastic element 42 may be located outside the ring element 43.

In addition to the elastic member 40 and the tilting member 41, the upper bearing housing 20 may be supported by a plurality of spring elements 27 circumferentially distributed around the spindle 3. The spring elements 27 may rest against an upper intermediate wall 28 of the stationary frame 2 and may support the upper bearing housing 20 from beneath, as can be seen in Figs 2, 4 and 6. The spring elements 27 permit the upper bearing housing 20 to move resiliently in an axial direction.

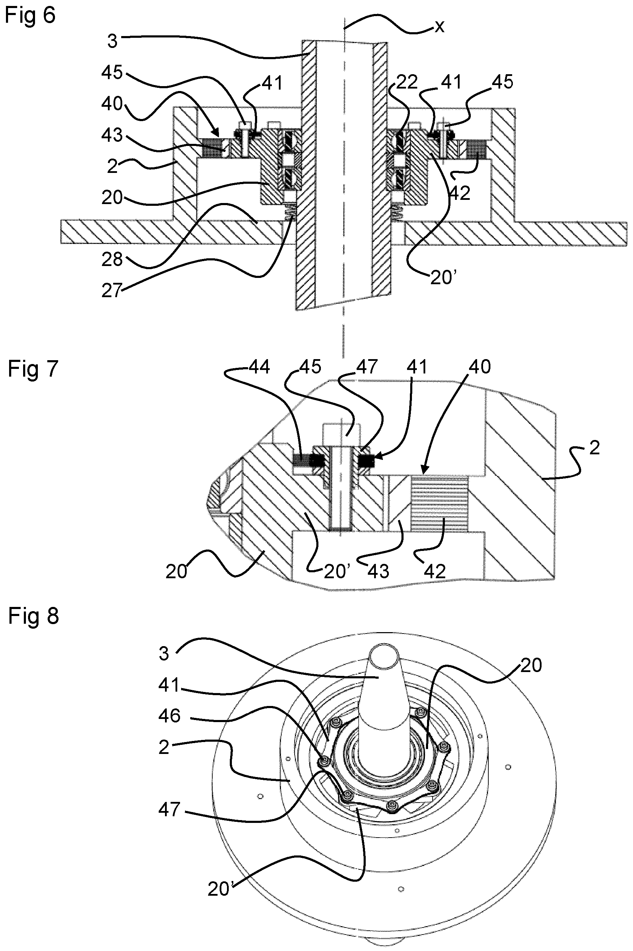

The upper tilting member 41 may comprise a pack of annular disks 44 extending around the upper bearing housing 20 and being attached to the upper bearing housing 20 and to the ring element 43 of the elastic member 40, see Figs 6 and 4.

The pack of annular disks 44 may comprise a plurality of annular disks 44, which may be identical with each other. Each of the annular disks 44 may be made from cold rolled sheet metal. Thus, a strong and flexible upper tilting member 41 may be provided, which has superior material properties in the context of the herein discussed tilting member as compared to hot rolled sheet metal. The annular disks 44 may be made from steel, such as stainless steel, spring steel, or similar, i.e. such as cold rolled steel sheet, cold rolled stainless steel sheet, cold rolled spring steel sheet, etc. A body of the upper tilting member 41 may be made up of annular disks 44 only.

In the embodiments disclosed, the pack of annular disks 44 comprises eight equidistant apertures extending through each of the annular disks 44. A respective sleeve element 47 is provided in each of the apertures. The sleeve element 47 is configured to keep the annular disks 44 together, and thus to ensure the integrity of the pack upper tilting element 41. Each of the sleeve elements 47 has a through-going hole as can be seen in Figs and 7.

In the first embodiment, the pack of annular disks 44 of the upper tilting member 41 is attached to the upper bearing housing 20 by four primary attachment members 45 equidistantly separated from each other around the annular disks 44, see Fig 6. In particular, the upper tilting member 41 may be attached to four radially extending projections 20' of the upper bearing housing 20, see Figs 7 and 8.

Furthermore, the pack of annular disks 44 of the upper tilting member 41 may be attached to ring element 43 of the elastic member 40 by four secondary attachment members 46 each being positioned between a respective pair of adjacent primary attachment members 45, see Fig 4. In particular, the upper tilting member 41 may be attached to four radially extending projections 43' of the ring element 43, see Figs 5 and 8.

Each of the primary and secondary attachment members 45, 46 may comprise a screw bolt extending through the hole of the sleeve element 47 of a respective one of the apertures through the pack of annular disks 44 of the upper tilting member 41, wherein the screw bolts of the primary attachment members 45 may engage a respective threaded hole into a respective one of the projections 20' of the upper bearing housing 20 and the screw bolts of the secondary attachment members 46 may engage a respective threaded hole into a respective one of the projections 43' of the ring element 43 of the elastic member 40.

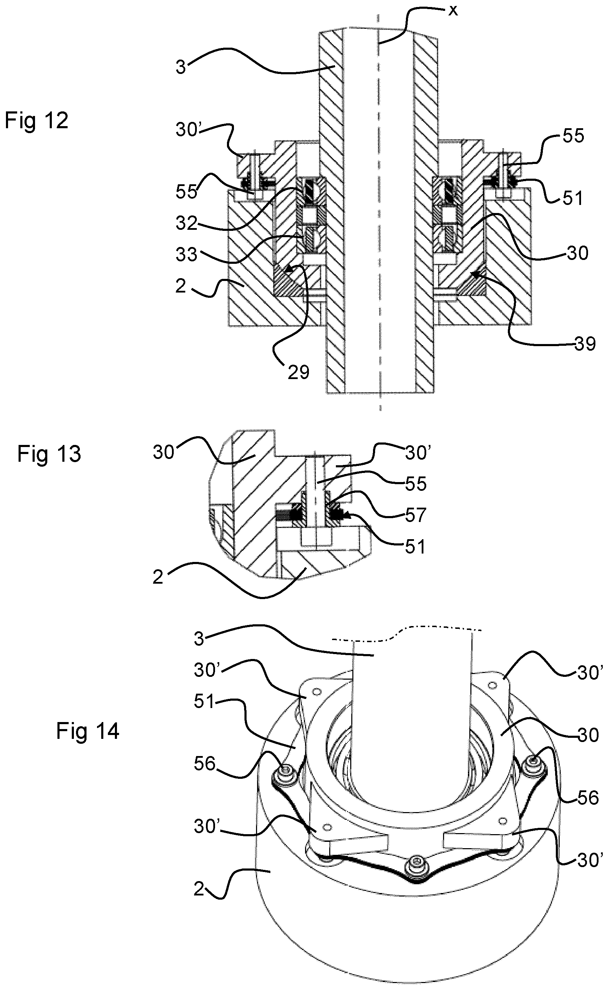

The lower bearing housing 30 may be mounted to the stationary frame 2 via a lower tilting member 51 permitting the spindle 3 to tilt in relation to the central axis x. In the embodiments disclosed, the lower tilting member 51 comprises a pack of annular disks 54 extending around the lower bearing housing 30. The pack of annular disks 54 are attached to the lower bearing housing 30 and to the stationary frame 2, as can be seen in Figs 12 and 10.

Also the pack of annular disks 54 at the lower tilting member 51 may comprise a plurality of annular disks 54, which may identical with each other. Thus, a strong and flexible lower tilting member 51 may be provided, which has superior material properties in the context of the herein discussed tilting member as compared to hot rolled sheet metal. The annular disks 54 may be made from steel, such as stainless steel, spring steel, or similar, i.e. such as cold rolled steel sheet, cold rolled stainless steel sheet, cold rolled spring steel sheet, etc. A body of the lower tilting member 51 may be made up of annular disks 54 only.

In the embodiments disclosed, the pack of annular disks 54 comprises eight equidistant apertures extending through each of the annular disks 54. A respective sleeve element 57 is provided in each of the apertures. The sleeve element 57 is configured to keep the annular disks 54 together, and thus to ensure the integrity of the pack lower tilting element 51. Each of the sleeve elements 57 has a through-going hole as can be seen in Fig 13.

In the embodiments disclosed, the pack of annular disks 54 of the lower tilting member 51 is attached to the lower bearing housing 30 by four primary attachment members 55 equidistantly separated from each other around the annular disks 54, see Fig 12. In particular, the lower tilting member 51 may be attached to radially extending projections 30' of the lower bearing housing 30, see Fig 13.

Furthermore, the pack of annular disks 54 may be attached to the stationary frame 2 by four secondary attachment members 56 each being positioned between a respective pair of adjacent primary attachment members 55, see Figs 9-11.

Each of the primary attachment members 55 and the secondary attachment members 56 attaching the lower tilting member 51 comprises a screw bolt extending through the hole of the sleeve element 57 of a respective one of the apertures through the pack of annular disks 54 of the lower tilting member 51.

The screw bolts of the primary attachment members 55 may extend through the pack of annular disks 55 in a first axial direction upwards as can be seen in Fig 12. The screw bolts of the secondary attachment members 56 may extend through the pack of annular disks 54 in an opposite second axial direction downwards as can be seen in Fig 10.

The lower bearing housing 30 may comprise a lower convex spherical surface 39 that is supported by and may rest against a concave spherical surface 29 provided on the stationary frame 2, see Figs 2 and 12. The spherical surfaces 29, 39 may provide a lower support for the spindle 3 and may provide a tilting point around which the spindle 3 may tilt.

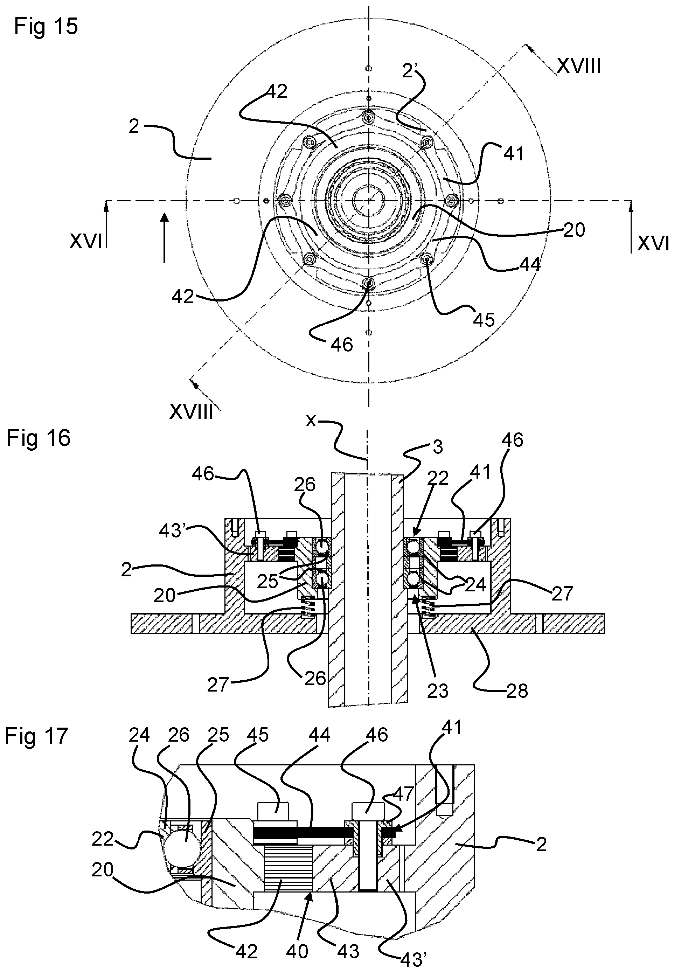

Figs 15-20 refers to a second embodiment which differs from the first embodiment only with respect to the attachment of the upper bearing housing 20, and in particular through the positioning of the elastic member 40 and the tilting member 41 in relation to each other. In the second embodiment, the elastic member 40 is located radially inside the tilting member 41. In the second embodiment, the configuration and arrangement of the lower bearing housing 30 are the same as in the first embodiment.

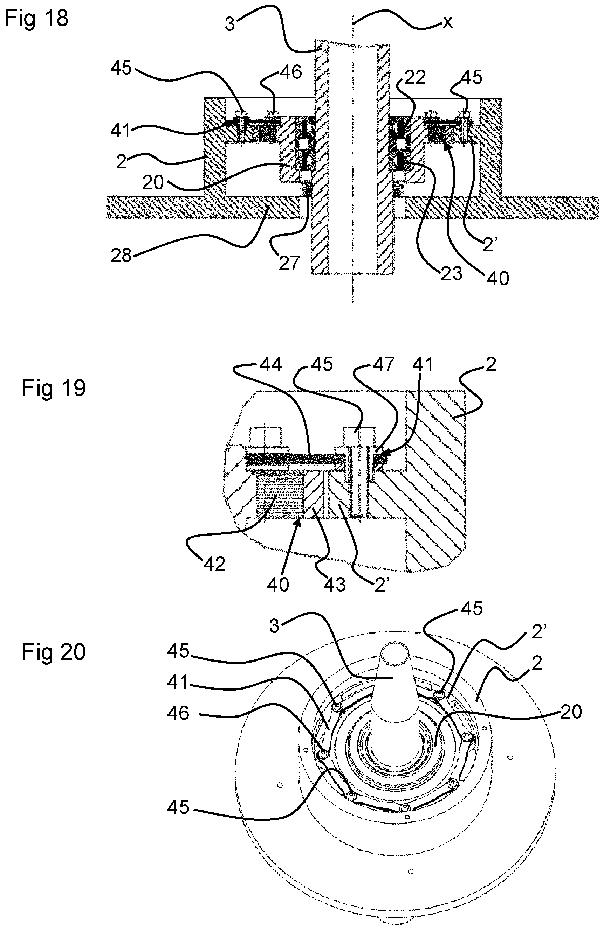

Also in the second embodiment, the elastic member 40 comprises an annular elastic element 42 and a ring element 43, as can be seen in Figs 17 and 19, but the elastic element 42 is located radially inside the ring element 43. The elastic element 42 is attached to the upper bearing housing 20 and the ring element 43 is attached to the tilting member 41.

In the second embodiment, the pack of annular disks 44 of the upper tilting member 41 is attached to the stationary frame 2 by four primary attachment members 45 equidistantly separated from each other around the annular disks 44, see Figs 18-20. In particular, the upper tilting member 41 may be attached to four radially extending projections 2' of the stationary frame 2, see Figs 19 and 20.

Furthermore, the pack of annular disks 44 of the upper tilting member 41 may be attached to ring element 43 of the elastic member 40 by four secondary attachment members 46 each being positioned between a respective pair of adjacent primary attachment members 45, see Figs 15-17. In particular, the upper tilting member 41 may be attached to four radially extending projections 43' of the ring element 43, see Figs 16 and 17.

The present invention is not limited to the embodiments disclosed but may be varied and modified within the scope of the following claims.

## Claims

1. A centrifugal separator (1) for processing a product by separating a relatively heavy component and a relatively light component from the product, the centrifugal separator (1) comprising
a stationary frame (2),
a spindle (3) supported by the stationary frame (2) and extending in parallel with a central axis (x),
a drive unit (4) acting on a rotating member (5) mounted on the spindle (3) to rotate the spindle (3) in relation to the stationary frame (2),
a centrifuge rotor (8) mounted to the spindle (3) and enclosing a separation space (9),
an inlet (10) for the product to the separation space (9),
a first outlet (11) for the relatively light component from the separation space (9),
a second outlet (12) for the relatively heavy component from the separation space (9), and
an upper bearing housing (20) mounted to the stationary frame (2) and supporting at least one bearing (22, 23) comprising an outer bearing ring (24) attached to the upper bearing housing (20) and an inner bearing ring (25) attached to the spindle (3),
wherein the upper bearing housing (20) is mounted to the stationary frame (2) via an elastic member (40) permitting the upper bearing housing (20) and thus the spindle (3) to move radially during the rotation of the spindle (3),
wherein the upper bearing housing (20) is mounted to the stationary frame (2) via the elastic member (40) and an upper tilting member (41) permitting the spindle (3) to tilt in relation to the central axis (x) during operation of the centrifugal separator (1), wherein the elastic member (40) and the upper tilting member (41) are arranged one after the other in a radial direction and
**characterised in that**
the upper tilting member (41) comprises a pack of annular disks (44) extending around the upper bearing housing (20) and being attached to the upper bearing housing (20) and to the elastic member (40).

2. The centrifugal separator (1) according to claim 1, wherein the pack of annular disks (44) of the upper tilting member (41) is attached to the upper bearing housing (20) by at least three primary attachment members (45) equidistantly separated from each other around the annular disks (44), and attached to the elastic member (40) by at least three secondary attachment members (46) each being positioned between a respective pair of adjacent primary attachment members (45).

3. The centrifugal separator (1) according to claim 1, wherein the pack of annular disks (44) of the upper tilting member (41) is attached to the stationary frame (2) by at least three primary attachment members (45) equidistantly separated from each other around the annular disks (44), and attached to the elastic member (40) by at least three secondary attachment members (46) each being positioned between a respective pair of adjacent primary attachment members (45).

4. The centrifugal separator (1) according to any one of claims 2 and 3, wherein each of the primary and secondary attachment members (45, 46) comprises a screw bolt extending through a respective aperture through the pack of annular disks (44) of the upper tilting member (41).

5. The centrifugal separator (1) according to any one of the preceding claims, wherein the at least one bearing comprises a first bearing (22) comprising an outer bearing ring (24) attached to the upper bearing housing (20) and an inner bearing ring (25) attached to the spindle (3), and a second bearing (23) comprising an outer bearing ring (24) attached to the upper bearing housing (20) and an inner bearing ring (25) attached to the spindle (3).

6. The centrifugal separator (1) according to any one of the preceding claims, wherein the centrifugal separator comprises a lower bearing housing (30) mounted to the stationary frame (2) and supporting at least one bearing (32, 33) comprising an outer bearing ring (34) attached to the lower bearing housing (30) and an inner bearing ring (35) attached to the spindle (3).

7. The centrifugal separator (1) according to claim 6, wherein the lower bearing housing (30) is mounted to the stationary frame (2) via a lower tilting member (51) permitting the spindle (3) to tilt in relation to the central axis (x) during operation of the centrifugal separator (1).

8. The centrifugal separator (1) according to claim 7, wherein the lower tilting member (51) comprises a pack of annular disks (54) extending around the lower bearing housing (30) and being attached to the lower bearing housing (30) and to the stationary frame (2).

9. The centrifugal separator (1) according to claim 8, wherein the pack of annular disks (54) of the lower tilting member (51) is attached to the lower bearing housing (30) by at least three primary attachment members (55) equidistantly separated from each other around the annular disks (54), and to the stationary frame (2) by at least three secondary attachment members (56) each being positioned between a respective pair of adjacent primary attachment members (55).

10. The centrifugal separator (1) according to claim 9, wherein each of the primary and secondary attachment members (55, 56) attaching the lower tilting member (51) comprises a screw bolt extending through a respective aperture through the pack of annular disks (54) of the lower tilting member (51), and wherein the screw bolts of the primary attachment members (55) extend through the pack of annular disks (55) in a first axial direction and the screw bolts of the secondary attachment members (56) extend through the pack of annular disks (54) in an opposite second axial direction.

11. The centrifugal separator (1) according to any one of claims 6 to 10, wherein the at least one bearing of the lower bearing housing (30) comprises a first bearing (32) comprising an outer bearing ring (34) attached to the lower bearing housing (30) and an inner bearing ring (35) attached to the spindle (3), a second bearing (33) comprising an outer bearing ring (34) attached to the lower bearing housing (30) and an inner bearing ring (35) attached to the spindle (3).

12. The centrifugal separator (1) according to any one of claims 6 to 11, wherein the lower bearing housing (30) comprises a lower convex spherical surface (39) supported by a concave spherical surface (29) provided on the stationary frame (2).

13. The centrifugal separator (1) according to any one of claims 6 to 12, wherein the rotating member (5) of the drive unit (4) is mounted on the spindle (3) between the upper bearing housing (20) and the lower bearing housing (30).

14. The centrifugal separator (1) according to any one of the preceding claims, wherein the drive unit (4) comprises an electric motor having a stator (6) attached to the stationary frame and a motor rotor (7).

15. The centrifugal separator (1) according to claim 14, wherein the rotating member (5) comprises the motor rotor (7).

16. The centrifugal separator (1) according to any one of the preceding claims, wherein the spindle (3) is hollow and surrounds the inlet (11) for the product and/or the first outlet (12) for the relatively light component.

17. A centrifugal separator (1) for processing a product by separating a relatively heavy component and a relatively light component from the product, the centrifugal separator (1) comprising
a stationary frame (2),
a spindle (3) supported by the stationary frame (2) and extending in parallel with a central axis (x),
a drive unit (4) acting on a rotating member (5) mounted on the spindle (3) to rotate the spindle (3) in relation to the stationary frame (2),
a centrifuge rotor (8) mounted to the spindle (3) and enclosing a separation space (9),
an inlet (10) for the product to the separation space (9),
a first outlet (11) for the relatively light component from the separation space (9),
a second outlet (12) for the relatively heavy component from the separation space (9), and
an upper bearing housing (20) mounted to the stationary frame (2) and supporting at least one bearing (22, 23) comprising an outer bearing ring (24) attached to the upper bearing housing (20) and an inner bearing ring (25) attached to the spindle (3),
wherein the upper bearing housing (20) is mounted to the stationary frame (2) via an elastic member (40) permitting the upper bearing housing (20) and thus the spindle (3) to move radially during the rotation of the spindle (3),
wherein the upper bearing housing (20) is mounted to the stationary frame (2) via the elastic member (40) and an upper tilting member (41) permitting the spindle (3) to tilt in relation to the central axis (x) during operation of the centrifugal separator (1), wherein the elastic member (40) and the upper tilting member (41) are arranged one after the other in a radial direction
wherein the centrifugal separator comprises a lower bearing housing (30) mounted to the stationary frame (2) and supporting at least one bearing (32, 33) comprising an outer bearing ring (34) attached to the lower bearing housing (30) and an inner bearing ring (35) attached to the spindle (3), and
wherein the lower bearing housing (30) is mounted to the stationary frame (2) via a lower tilting member (51) permitting the spindle (3) to tilt in relation to the central axis (x) during operation of the centrifugal separator (1), and
**characterised in that**
the lower tilting member (51) comprises a pack of annular disks (54) extending around the lower bearing housing (30) and being attached to the lower bearing housing (30) and to the stationary frame (2).

## Patentansprüche

1. Zentrifugalseparator (1) zum Verarbeiten eines Produkts durch Abtrennen einer relativ schweren und einer relativ leichten Komponente aus dem Produkt, wobei der Zentrifugalseparator (1) umfasst:
einen stationären Rahmen (2),
eine Spindel (3), die durch den stationären Rahmen (2) getragen wird und sich parallel zu einer Mittelachse (x) erstreckt,
eine Antriebseinheit (4), die auf ein auf der Spindel (3) angebrachtes Drehelement (5) wirkt, um die Spindel (3) in Bezug auf den stationären Rahmen (2) zu drehen,
einen Zentrifugenrotor (8), der an der Spindel (3) angebracht ist und einen Trennraum (9) umschließt,
einen Einlass (10) für das Produkt zum Trennraum (9),
einen ersten Auslass (11) für die relativ leichte Komponente aus dem Trennraum (9),
einen zweiten Auslass (12) für die relativ schwere Komponente aus dem Trennraum (9), und
ein oberes Lagergehäuse (20), das am stationären Rahmen (2) angebracht ist und mindestens ein Lager (22, 23) trägt, das einen am oberen Lagergehäuse (20) befestigten äußeren Lagerring (24) und einen an der Spindel (3) befestigten inneren Lagerring (25) umfasst,
wobei das obere Lagergehäuse (20) über ein elastisches Element (40), das ermöglicht, dass das obere Lagergehäuse (20) und damit die Spindel (3) sich während der Drehung der Spindel (3) radial bewegen, am stationären Rahmen (2) angebracht ist,
wobei das obere Lagergehäuse (20) über das elastische Element (40) und ein oberes Neigeelement (41), das ermöglicht, dass die Spindel (3) sich während des Betriebs des Zentrifugalseparators (1) in Bezug auf die Mittelachse (x) neigt, am stationären Rahmen (2) angebracht ist, wobei das elastische Element (40) und das obere Neigeelement (41) in einer radialen Richtung hintereinander angeordnet sind, und
**dadurch gekennzeichnet, dass** das obere Neigeelement (41) ein Paket von ringförmigen Scheiben (44) umfasst, die sich um das obere Lagergehäuse (20) herum erstrecken und am oberen Lagergehäuse (20) sowie am elastischen Element (40) befestigt sind.

2. Zentrifugalseparator (1) nach Anspruch 1, wobei das Paket von ringförmigen Scheiben (44) des oberen Neigeelements (41) durch mindestens drei primäre Befestigungselemente (45), die um die ringförmigen Scheiben (44) herum gleichmäßig voneinander beabstandet sind, am oberen Lagergehäuse (20) befestigt ist und durch mindestens drei sekundäre Befestigungselemente (46), deren jedes zwischen einem jeweiligen Paar von benachbarten primären Befestigungselementen (45) positioniert sind, am elastischen Element (40) befestigt ist.

3. Zentrifugalseparator (1) nach Anspruch 1, wobei das Paket von ringförmigen Scheiben (44) des oberen Neigeelements (41) durch mindestens drei primäre Befestigungselemente (45), die um die ringförmigen Scheiben (44) herum gleichmäßig voneinander beabstandet sind, am stationären Rahmen (2) befestigt ist und durch mindestens drei sekundäre Befestigungselemente (46), deren jedes zwischen einem jeweiligen Paar von benachbarten primären Befestigungselementen (45) positioniert sind, am elastischen Element (40) befestigt ist.

4. Zentrifugalseparator (1) nach einem der Ansprüche 2 und 3, wobei jedes der primären und sekundären Befestigungselemente (45, 46) einen Gewindebolzen umfasst, der sich durch eine jeweilige Öffnung durch das Paket von ringförmigen Scheiben (44) des oberen Neigeelements (41) erstreckt.

5. Zentrifugalseparator (1) nach einem der vorstehenden Ansprüche, wobei das mindestens eine Lager Folgendes umfasst: ein erstes Lager (22), das einen am oberen Lagergehäuse (20) befestigten äußeren Lagerring (24) und einen an der Spindel (3) befestigten inneren Lagerring (25) umfasst, und ein zweites Lager (23), das einen am oberen Lagergehäuse (20) befestigten äußeren Lagerring (24) und einen an der Spindel (3) befestigten inneren Lagerring (25) umfasst.

6. Zentrifugalseparator (1) nach einem der vorstehenden Ansprüche, wobei der Zentrifugalseparator ein unteres Lagergehäuse (30) umfasst, das am stationären Rahmen (2) angebracht ist und mindestens ein Lager (32, 33) trägt, das einen am unteren Lagergehäuse (30) befestigten äußeren Lagerring (34) und einen an der Spindel (3) befestigten inneren Lagerring (35) umfasst.

7. Zentrifugalseparator (1) nach Anspruch 6, wobei das untere Lagergehäuse (30) über ein unteres Neigeelement (51), das ermöglicht, dass die Spindel (3) sich während des Betriebs des Zentrifugalseparators (1) in Bezug auf die Mittelachse (x) neigt, am stationären Rahmen (2) angebracht ist.

8. Zentrifugalseparator (1) nach Anspruch 7, wobei das untere Neigeelement (51) ein Paket von ringförmigen Scheiben (54) umfasst, die sich um das untere Lagergehäuse (30) herum erstrecken und am unteren Lagergehäuse (30) sowie am stationären Rahmen (2) befestigt sind.

9. Zentrifugalseparator (1) nach Anspruch 8, wobei das Paket von ringförmigen Scheiben (54) des unteren Neigeelements (51) durch mindestens drei primäre Befestigungselemente (55), die um die ringförmigen Scheiben (54) herum gleichmäßig voneinander beabstandet sind, am unteren Lagergehäuse (30) und durch mindestens drei sekundäre Befestigungselemente (56), deren jedes zwischen einem jeweiligen Paar von benachbarten primären Befestigungselementen (55) positioniert sind, am stationären Rahmen (2) befestigt ist.

10. Zentrifugalseparator (1) nach Anspruch 9, wobei jedes der primären und sekundären Befestigungselemente (55, 56), die das untere Neigeelement (51) befestigen, einen Gewindebolzen umfasst, der sich durch eine jeweilige Öffnung durch das Paket von ringförmigen Scheiben (54) des unteren Neigeelements (51) erstreckt, und wobei die Gewindebolzen der primären Befestigungselemente (55) sich in einer ersten axialen Richtung durch das Paket von ringförmigen Scheiben (55) erstrecken und die Gewindebolzen der sekundären Befestigungselemente (56) sich in einer entgegengesetzten zweiten axialen Richtung durch das Paket von ringförmigen Scheiben (54) erstrecken.

11. Zentrifugalseparator (1) nach einem der Ansprüche 6 bis 10, wobei das mindestens eine Lager des unteren Lagergehäuses (30) Folgendes umfasst: ein erstes Lager (32), das einen am unteren Lagergehäuse (30) befestigten äußeren Lagerring (34) und einen an der Spindel (3) befestigten inneren Lagerring (35) umfasst, und ein zweites Lager (33), das einen am unteren Lagergehäuse (30) befestigten äußeren Lagerring (34) und einen an der Spindel (3) befestigten inneren Lagerring (35) umfasst.

12. Zentrifugalseparator (1) nach einem der Ansprüche 6 bis 11, wobei das untere Lagergehäuse (30) eine untere konvexe sphärische Oberfläche (39) umfasst, die durch eine auf dem stationären Rahmen (2) bereitgestellte konkave sphärische Oberfläche (29) getragen wird.

13. Zentrifugalseparator (1) nach einem der Ansprüche 6 bis 12, wobei das rotierende Element (5) der Antriebseinheit (4) an der Spindel (3) zwischen dem oberen Lagergehäuse (20) und dem unteren Lagergehäuse (30) angebracht ist.

14. Zentrifugalseparator (1) nach einem der vorstehenden Ansprüche, wobei die Antriebseinheit (4) einen Elektromotor umfasst, der einen am stationären Rahmen befestigten Stator (6) und einen Motorrotor (7) aufweist.

15. Zentrifugalseparator (1) nach Anspruch 14, wobei das rotierende Element (5) den Motorrotor (7) umfasst.

16. Zentrifugalseparator (1) nach einem der vorstehenden Ansprüche, wobei die Spindel (3) hohl ist und den Einlass (11) für das Produkt und/oder den ersten Auslass (12) für die relativ leichte Komponente umgibt.

17. Zentrifugalseparator (1) zum Verarbeiten eines Produkts durch Abtrennen einer relativ schweren und einer relativ leichten Komponente aus dem Produkt, wobei der Zentrifugalseparator (1) umfasst:
einen stationären Rahmen (2),
eine Spindel (3), die durch den stationären Rahmen (2) getragen wird und sich parallel zu einer Mittelachse (x) erstreckt,
eine Antriebseinheit (4), die auf ein Drehelement (5) wirkt, das auf der Spindel (3) angebracht ist, um die Spindel (3) in Bezug auf stationären Rahmen (2) zu drehen,
einen Zentrifugenrotor (8), der an der Spindel (3) angebracht ist und einen Trennraum (9) umschließt,
einen Einlass (10) für das Produkt zum Trennraum (9),
einen ersten Auslass (11) für die relativ leichte Komponente aus dem Trennraum (9),
einen zweiten Auslass (12) für die relativ schwere Komponente aus dem Trennraum (9), und
ein oberes Lagergehäuse (20), das am stationären Rahmen (2) angebracht ist und mindestens ein Lager (22, 23) trägt, das einen am oberen Lagergehäuse (20) befestigten äußeren Lagerring (24) und einen an der Spindel (3) befestigten inneren Lagerring (25) umfasst,
wobei das obere Lagergehäuse (20) über ein elastisches Element (40), das ermöglicht, dass das obere Lagergehäuse (20) und damit die Spindel (3) sich während der Drehung der Spindel (3) radial bewegen, am stationären Rahmen (2) angebracht ist,
wobei das obere Lagergehäuse (20) über das elastische Element (40) und ein oberes Neigeelement (41), das ermöglicht, dass die Spindel (3) sich während des Betriebs des Zentrifugalseparators (1) in Bezug auf die Mittelachse (x) neigt, am stationären Rahmen (2) angebracht ist, wobei das elastische Element (40) und das obere Neigeelement (41) in einer radialen Richtung hintereinander angeordnet sind,
wobei der Zentrifugalseparator ein unteres Lagergehäuse (30) umfasst, das am stationären Rahmen (2) angebracht ist und mindestens ein Lager (32, 33) trägt, das einen am unteren Lagergehäuse (30) befestigten äußeren Lagerring (34) und einen an der Spindel (3) befestigten inneren Lagerring (35) umfasst, und
wobei das untere Lagergehäuse (30) über ein unteres Neigeelement (51), das ermöglicht, dass die Spindel (3) sich während des Betriebs des Zentrifugalseparators (1) in Bezug auf die Mittelachse (x) neigt, am stationären Rahmen (2) angebracht ist, und
**dadurch gekennzeichnet, dass** das untere Neigeelement (51) ein Paket von ringförmigen Scheiben (54) umfasst, die sich um das untere Lagergehäuse (30) herum erstrecken und am unteren Lagergehäuse (30) sowie am stationären Rahmen (2) befestigt sind.

## Revendications

1. Séparateur centrifuge (1) pour traiter un produit en
séparant un composant relativement lourd et un composant relativement léger du produit, le séparateur centrifuge (1) comprenant
un cadre fixe (2),
une broche (3) soutenue par le cadre fixe (2) et s'étendant parallèlement à un axe central (x),
une unité d'entraînement (4) agissant sur un élément rotatif (5) monté sur la broche (3) pour faire tourner la broche (3) par rapport au cadre fixe (2),
un rotor de centrifugeuse (8) monté sur la broche (3) et renfermant un espace de séparation (9),
une entrée (10) pour le produit vers l'espace de séparation (9),
une première sortie (11) pour le composant relativement léger provenant de l'espace de séparation (9),
une seconde sortie (12) pour le composant relativement lourd provenant de l'espace de séparation (9), et
un logement de palier supérieur (20) monté sur le cadre fixe (2) et soutenant au moins un palier (22, 23) comprenant une bague de palier extérieure (24) fixée au logement de palier supérieur (20) et une bague de palier intérieure (25) fixée à la broche (3),
dans lequel le logement de palier supérieur (20) est monté sur le cadre fixe (2) par le biais d'un élément élastique (40) permettant au logement de palier supérieur (20) et donc à la broche (3) de se déplacer radialement pendant la rotation de la broche (3),
dans lequel le logement de palier supérieur (20) est monté sur le cadre fixe (2) par le biais de l'élément élastique (40) et d'un élément d'inclinaison supérieur (41) permettant à la broche (3) de s'incliner par rapport à l'axe central (x) pendant le fonctionnement du séparateur centrifuge (1), dans lequel l'élément élastique (40) et l'élément d'inclinaison supérieur (41) sont agencés l'un après l'autre dans une direction radiale et
**caractérisé en ce que** l'élément d'inclinaison supérieur (41) comprend un ensemble de disques annulaires (44) s'étendant autour du logement de palier supérieur (20) et étant fixé au logement de palier supérieur (20) et à l'élément élastique (40).

2. Séparateur centrifuge (1) selon la revendication 1, dans lequel l'ensemble de disques annulaires (44) de l'élément d'inclinaison supérieur (41) est fixé au logement de palier supérieur (20) par au moins trois éléments de fixation principaux (45) séparés de manière équidistante les uns des autres autour des disques annulaires (44), et fixé à l'élément élastique (40) par au moins trois éléments de fixation secondaires (46) étant chacun positionnés entre une paire respective d'éléments de fixation principaux (45) adjacents.

3. Séparateur centrifuge (1) selon la revendication 1, dans lequel l'ensemble de disques annulaires (44) de l'élément d'inclinaison supérieur (41) est fixé au cadre fixe (2) par au moins trois éléments de fixation principaux (45) séparés de manière équidistante les uns des autres autour des disques annulaires (44), et fixé à l'élément élastique (40) par au moins trois éléments de fixation secondaires (46) étant chacun positionnés entre une paire respective d'éléments de fixation principaux (45) adjacents.

4. Séparateur centrifuge (1) selon l'une quelconque des revendications 2 et 3, dans lequel chacun des éléments de fixation primaires et secondaires (45, 46) comprend un boulon à vis s'étendant à travers une ouverture respective à travers l'ensemble de disques annulaires (44) de l'élément d'inclinaison supérieur (41).

5. Séparateur centrifuge (1) selon l'une quelconque des revendications précédentes, dans lequel le au moins un palier comprend un premier palier (22) comprenant une bague de palier extérieure (24) fixée au logement de palier supérieur (20) et une bague de palier intérieure (25) fixée à la broche (3), et un second palier (23) comprenant une bague de palier extérieure (24) fixée au logement de palier supérieur (20) et une bague de palier intérieure (25) fixée à la broche (3).

6. Séparateur centrifuge (1) selon l'une quelconque des revendications précédentes, dans lequel le séparateur centrifuge comprend un logement de palier inférieur (30) monté sur le cadre fixe (2) et soutenant au moins un palier (32, 33) comprenant une bague de palier extérieure (34) fixée au logement de palier inférieur (30) et une bague de palier intérieure (35) fixée à la broche (3).

7. Séparateur centrifuge (1) selon la revendication 6, dans lequel le logement de palier inférieur (30) est monté sur le cadre fixe (2) par le biais d'un élément d'inclinaison inférieur (51) permettant à la broche (3) de s'incliner par rapport à l'axe central (x) pendant le fonctionnement du séparateur centrifuge (1).

8. Séparateur centrifuge (1) selon la revendication 7, dans lequel l'élément d'inclinaison inférieur (51) comprend un ensemble de disques annulaires (54) s'étendant autour du logement de palier inférieur (30) et étant fixé au logement de palier inférieur (30) et au cadre fixe (2).

9. Séparateur centrifuge (1) selon la revendication 8, dans lequel l'ensemble de disques annulaires (54) de l'élément d'inclinaison inférieur (51) est fixé au logement de palier inférieur (30) par au moins trois éléments de fixation principaux (55) séparés de manière équidistante les uns des autres autour des disques annulaires (54), et au cadre fixe (2) par au moins trois éléments de fixation secondaires (56) étant chacun positionnés entre une paire respective d'éléments de fixation principaux (55) adjacents.

10. Séparateur centrifuge (1) selon la revendication 9, dans lequel chacun des éléments de fixation primaires et secondaires (55, 56) fixant l'élément d'inclinaison inférieur (51) comprend un boulon à vis s'étendant à travers une ouverture respective à travers l'ensemble de disques annulaires (54) de l'élément d'inclinaison inférieur (51), et dans lequel les boulons à vis des éléments de fixation primaires (55) s'étendent à travers l'ensemble de disques annulaires (55) dans une première direction axiale et les boulons à vis des éléments de fixation secondaires (56) s'étendent à travers l'ensemble de disques annulaires (54) dans une seconde direction axiale opposée.

11. Séparateur centrifuge (1) selon l'une quelconque des revendications 6 à 10, dans lequel le au moins un palier du logement de palier inférieur (30) comprend un premier palier (32) comprenant une bague de palier extérieure (34) fixée au logement de palier inférieur (30) et une bague de palier intérieure (35) fixée à la broche (3), un second palier (33) comprenant une bague de palier extérieure (34) fixée au logement de palier inférieur (30) et une bague de palier intérieure (35) fixée à la broche (3).

12. Séparateur centrifuge (1) selon l'une quelconque des revendications 6 à 11, dans lequel le logement de palier inférieur (30) comprend une surface sphérique convexe inférieure (39) soutenue par une surface sphérique concave (29) prévue sur le cadre fixe (2).

13. Séparateur centrifuge (1) selon l'une quelconque des revendications 6 à 12, dans lequel l'élément rotatif (5) de l'unité d'entraînement (4) est monté sur la broche (3) entre le logement de palier supérieur (20) et le logement de palier inférieur (30).

14. Séparateur centrifuge (1) selon l'une quelconque des revendications précédentes, dans lequel l'unité d'entraînement (4) comprend un moteur électrique présentant un stator (6) fixé au cadre fixe et un rotor de moteur (7).

15. Séparateur centrifuge (1) selon la revendication 14, dans lequel l'élément rotatif (5) comprend le rotor de moteur (7).

16. Séparateur centrifuge (1) selon l'une quelconque des revendications précédentes, dans lequel la broche (3) est creuse et entoure l'entrée (11) pour le produit et/ou la première sortie (12) pour le composant relativement léger.

17. Séparateur centrifuge (1) pour traiter un produit en séparant un composant relativement lourd et un composant relativement léger du produit, le séparateur centrifuge (1) comprenant
un cadre fixe (2),
une broche (3) soutenue par le cadre fixe (2) et s'étendant parallèlement à un axe central (x),
une unité d'entraînement (4) agissant sur un élément rotatif (5) monté sur la
broche (3) pour faire tourner la broche (3) par rapport au cadre fixe (2),
un rotor de centrifugeuse (8) monté sur la broche (3) et renfermant un espace de séparation (9),
une entrée (10) pour le produit vers l'espace de séparation (9),
une première sortie (11) pour le composant relativement léger provenant de l'espace de séparation (9),
une seconde sortie (12) pour le composant relativement lourd provenant de l'espace de séparation (9), et
un logement de palier supérieur (20) monté sur le cadre fixe (2) et soutenant au moins un palier (22, 23) comprenant une bague de palier extérieure (24) fixée au logement de palier supérieur (20) et une bague de palier intérieure (25) fixée à la broche (3),
dans lequel le logement de palier supérieur (20) est monté sur le cadre fixe (2) par le biais d'un élément élastique (40) permettant au logement de palier supérieur (20) et donc à la broche (3) de se déplacer radialement pendant la rotation de la broche (3),
dans lequel le logement de palier supérieur (20) est monté sur le cadre fixe (2) par le biais de l'élément élastique (40) et d'un élément d'inclinaison supérieur (41) permettant à la broche (3) de s'incliner par rapport à l'axe central (x) pendant le fonctionnement du séparateur centrifuge (1), dans lequel l'élément élastique (40) et l'élément d'inclinaison supérieur (41) sont agencés l'un après l'autre dans une direction radiale,
dans lequel le séparateur centrifuge comprend un logement de palier inférieur (30) monté sur le cadre fixe (2) et soutenant au moins un palier (32, 33) comprenant une bague de palier extérieure (34) fixée au logement de palier inférieur (30) et une bague de palier intérieure (35) fixée à la broche (3), et
dans lequel le logement de palier inférieur (30) est monté sur le cadre fixe (2) par le biais d'un élément d'inclinaison inférieur (51) permettant à la broche (3) de s'incliner par rapport à l'axe central (x) pendant le fonctionnement du séparateur centrifuge (1), et
**caractérisé en ce que** l'élément d'inclinaison inférieur (51) comprend un ensemble de disques annulaires (54) s'étendant autour du logement de palier inférieur (30) et étant fixé au logement de palier inférieur (30) et au cadre fixe (2).
